# EUROPEAN PATENT APPLICATION

(11) **EP 4 768 406 A1**
(43) Date of publication of application: **01.07.2026**
(21) Application number: 24876921.8
(22) Date of filing: 30.07.2024
(51) Int. Cl.: B65G 45/10, B65G 43/02, B65G 45/14

(54) **CLEANING DEVICE AND CLEANING METHOD**

(30) Priority: 12.10.2023 JP 2023177037
(71) Applicant: JFE Steel Corporation, Tokyo 100-0011 (JP)
(72) Inventor: ENOEDA, Seiji, Tokyo 100-0011 (JP); YAMAHIRA, Naoshi, Tokyo 100-0011 (JP); ICHIKAWA, Takuto, Tokyo 100-0011 (JP); NISHINA, Yoshiaki, Tokyo 100-0011 (JP)
(74) Representative: Haseltine Lake Kempner LLP
(86) International application number: PCT/JP2024/027169
(87) International publication number: WO 2025/079320

(57) **Abstract**

To collect a deposit under a belt of a belt conveyor provided with a mobile machine and move the deposit to the outside of rails. A cleaning device for cleaning up a deposit accumulated under the belt of the belt conveyor, the cleaning device including a collecting unit mounted on the mobile machine that travels on the rails provided along the conveying direction of the belt conveyor, which collects the deposit under the belt and moves the deposit to the outside of the rails.

## Description

### TECHNICAL FIELD

The present disclosure relates to a cleaning device for cleaning up a deposit that accumulates under a belt of a belt conveyor. Further, the present disclosure relates to a cleaning method for cleaning up a deposit that accumulates under a belt of a belt conveyor.

### BACKGROUND

Belt conveyors are widely used to convey various items, and are particularly used in factories and the like to convey bulk material such as raw material.

For example, in steelworks, belt conveyors are used to convey raw material such as iron ore and coal used in the steelmaking process. Specifically, raw material imported by bulk carrier is unloaded from a raw material quay by an unloader and then conveyed to a raw material yard according to type and grade via numerous belt conveyors.

However, when conveying using a belt conveyor in this manner, the raw material and the like being conveyed may fall off the belt conveyor and accumulate under the belt. In particular, in the case of a belt conveyor having an endless belt, when the conveying surface of the belt moves to face downward, raw material adhering to the conveying surface tends to fall and become a deposit.

When such a deposit accumulates up to belt height, the deposit may come into contact with the belt, causing frictional heat that may ignite the belt and lead to a fire. Accordingly, clean up work is carried out periodically to collect deposits to avoid deposits coming into contact with belts.

Conventionally, the accumulation of deposits has been checked visually, and workers have cleaned up deposits using hand tools such as shovels. However, manually scraping out deposits from under belts is extremely hard work. In particular, in the raw material yards of steelworks, a plurality of belt conveyors having a total length of 1 km or more may be used, and there is a demand for more efficient clean up work.

Therefore, various methods have been proposed for efficiently collecting deposits that have accumulated under belts of belt conveyors.

For example, in Patent Literature (PTL) 1, a collecting device is proposed in which a scraping implement is attached to a vehicle such as heavy machinery. The scraping implement can be inserted under a belt conveyor and then pulled out to scrape out a deposit from under the belt conveyor.

Further, in PTL 2 and 3, methods are proposed of collecting deposits using compact heavy machinery that is of a height able to enter a space below a belt conveyor. By inserting the compact heavy machinery under the belt conveyor, a deposit can be pushed directly outside of the belt conveyor.

### CITATION LIST

### Patent Literature

PTL 1: JP S62-010342 A
PTL 2: JP 2014-005648 A
PTL 3: JP H09-025006 A

### SUMMARY

### (Technical Problem)

According to conventional techniques such as those described in PTL 1 to PTL 3, deposits can be recovered using heavy machinery or the like.

However, typically, various machines and related equipment for handling items such as raw materials conveyed by the belt conveyor (conveyed objects) are installed around the belt conveyor. Some of these machines move around the belt conveyor when in operation.

For example, in the raw material yard of a steelworks, loading and unloading machines such as stackers and reclaimers are arranged around belt conveyors. A stacker is a machine used to stack raw material. Raw material carried by a belt conveyor is transferred by a stacker and dropped into the raw material yard, where the raw material is stacked up as a raw material pile. Further, a reclaimer is a machine that reclaims raw material. Raw material stacked as a raw material pile is cut from the raw material pile by a reclaimer and conveyed to the next process by a belt conveyor. Such cargo handling machines are normally installed so as to be able to travel on rails laid parallel to belt conveyors, and can move within the raw material yard.

According to methods using heavy machinery as proposed in PTL 1 to PTL 3, it is necessary to bring the heavy machinery close to a belt conveyor in order to recover deposits. Therefore, it is necessary to stop operation of the above-mentioned machines around the belt conveyor, particularly mobile machines, and during that time, operation cannot continue. Further, when rails for a mobile machine are laid around the belt conveyor, these rails become an obstacle, making it difficult to move deposits to the outside of the rails.

The present disclosure is made in consideration of the above circumstances, and it would be helpful to provide a cleaning device and cleaning method that can recover a deposit under a belt of a belt conveyor provided with a mobile machine and move the deposit to the outside of rails.

### (Solution to Problem)

The present disclosure is made to solve the above problems, and the gist of the present disclosure is as follows.
1. A cleaning device for cleaning up a deposit accumulated under a belt of a belt conveyor, the cleaning device comprising
   a collecting unit mounted on a mobile machine that travels on rails provided along the conveying direction of the belt conveyor, and configured to recover the deposit under the belt and move the deposit to the outside of the rails.
2. The cleaning device according to 1, above, wherein the collecting unit comprises: a scraping arm configured to scrape out the deposit; and a collecting conveyor configured to recover and convey the deposit scraped out by the scraping arm to the outside of the rails.
3. The cleaning device according to 1 or 2, above, further comprising:
   a measuring unit configured to measure a height of the deposit accumulated under the belt; and
   a controller configured to drive the collecting unit to recover the deposit when the height of the deposit measured by the measuring unit exceeds a predetermined reference.
4. The cleaning device according to 3, above, further comprising: a processor configured to create, from the height of the deposit measured by the measuring unit, a deposit height map representing a relationship between a position in the conveying direction of the belt conveyor and the height of the deposit at the position, wherein
   the controller is configured to carry out a control based on the deposit height map.
5. The cleaning device according to 3 or 4, above, wherein
   the mobile machine is configured to handle items conveyed by the belt conveyor, and
   the controller is configured to drive the collecting unit to recover the deposit when the mobile machine is not in operation.
6. The cleaning device according to any one of 3 to 5, above, wherein the controller determines a timing of collecting the deposit in consideration of an operation schedule of the mobile machine.
7. A cleaning method for cleaning up a deposit accumulated under a belt of a belt conveyor, the cleaning method comprising
   collecting, via a collecting unit mounted on a mobile machine that travels on rails provided along the conveying direction of the belt conveyor, the deposit under the belt and moving the deposit to the outside of the rails.
8. The cleaning method according to 7, above, wherein the collecting unit comprises: a scraping arm configured to scrape out the deposit; and a conveyor configured to convey the deposit scraped out by the scraping arm to the outside of the rails.
9. The cleaning method according to 7 or 8, above, further comprising:
   measuring, via a measuring unit, a height of the deposit accumulated under the belt; and
   driving the collecting unit to recover the deposit when the height of the deposit measured by the measuring unit exceeds a predetermined reference.
10. The cleaning method according to 9, above, further comprising creating, from the height of the deposit measured by the measuring unit, a deposit height map representing a relationship between a position in the conveying direction of the belt conveyor and the height of the deposit at the position, and
   collecting the deposit based on the deposit height map.
11. The cleaning method according to 9 or 10, above, wherein
   the mobile machine is configured to handle items conveyed by the belt conveyor, and
   the collecting unit is driven to recover the deposit when the mobile machine is not in operation.
12. The cleaning method according to any one of 7 to 11, above, wherein a timing of collecting the deposit is determined in consideration of an operation schedule of the mobile machine.

### (Advantageous Effect)

According to the present disclosure, it is possible to move a deposit under a belt of a belt conveyor to which a mobile machine is provided to the outside of rails without using manual labor, and to efficiently recover the deposit.

### BRIEF DESCRIPTION OF THE DRAWINGS

In the accompanying drawings:
FIG. 1 is a side view diagram schematically illustrating a structure of a belt conveyor, a rail, and a mobile machine;
FIG. 2 is a front view diagram schematically illustrating a structure of a cleaning device according to an embodiment of the present disclosure;
FIG. 3 is a front view diagram schematically illustrating a structure of the cleaning device according to an embodiment of the present disclosure;
FIG. 4A, 4B, 4C, 4D are schematic diagrams illustrating an example of actions of a collecting unit;
FIG. 5E, 5F, 5G are schematic diagrams illustrating an example of actions of the collecting unit;
FIG. 6 is a front view diagram schematically illustrating a structure of the cleaning device according to another embodiment of the present disclosure;
FIG. 7 is a flowchart illustrating a cleaning method according to an embodiment of the present disclosure;
FIG. 8 is a flowchart illustrating a collection procedure according to an embodiment of the present disclosure; and
FIG. 9 is a flowchart illustrating a map update procedure according to an embodiment of the present disclosure.

### DETAILED DESCRIPTION

A detailed description is provided below. The following description describes examples of preferred embodiments of the present disclosure, and does not limit the disclosure to the embodiments described below.

A cleaning device according to an embodiment of the present disclosure is a cleaning device for cleaning up a deposit accumulated under a belt of a belt conveyor, and includes a collecting unit that recovers the deposit under the belt and moves the deposit to the outside of rails. The collecting unit is mounted on a mobile machine that travels on rails provided along the conveying direction of the belt conveyor.

Further, a cleaning method according to an embodiment of the present disclosure is a cleaning method for cleaning up a deposit that has accumulated under a belt of a belt conveyor, the cleaning method including collecting, via a collecting unit mounted on a mobile machine that travels on rails provided along the conveying direction of the belt conveyor, the deposit under the belt and moving the deposit to the outside of the rails.

### (Belt conveyor)

The belt conveyor is not particularly limited and may be any belt conveyor, but a typical example is a belt conveyor that conveys bulk material. This is because when conveying bulk material, the material being conveyed is particularly prone to falling and piling up. An example of a belt conveyor for conveying bulk material is a belt conveyor used to convey raw material in a factory, steelworks, or the like.

The location where the belt conveyor is installed is not particularly limited, and the belt conveyor may be installed either indoors or outdoors. The disclosed embodiments are particularly suitable for use with belt conveyors installed in outdoor raw material yards and the like.

### (Mobile machine)

According to the cleaning device of the present disclosure, the collecting unit is mounted on the mobile machine. Here, the mobile machine may be any machine that travels on rails provided along the conveying direction of the belt conveyor. The mobile machine is preferably one that handles items conveyed by the belt conveyor, and is more preferably one of a stacker, a reclaimer, a stacker-reclaimer, or an unloader. A stacker-reclaimer is a mobile machine that has the functions of both a stacker and a reclaimer.

### (Collecting unit)

The collecting unit recovers the deposit under the belt and moves the deposit to the outside of the rails. Here, "outside of the rails" refers to the opposite side of a rail from the belt conveyor. By moving the deposit to the outside of the rails using the collecting unit, it is possible to prevent the deposit from coming into contact with the belt. Further, travel of the mobile machine is not hindered by the deposit. The deposit that has been moved to the outside of the rails may be collected separately by any method.

The structure of the collecting unit is not particularly limited, and any structure may be used as long as the collecting unit can move the deposit under the belt to the outside of the rails. From the viewpoint of transporting the deposit to the outside of the rails without being obstructed by the rails, the collecting unit preferably includes a conveyor that conveys the deposit from the inside of the rails to the outside over a rail. Any conveyor may be used as the conveyor, for example, a belt conveyor.

The following describes preferred embodiments of the present disclosure, with reference to the drawings. The following explanation assumes that the belt conveyor is installed in the raw material yard of a steelworks and a stacker is used as the mobile machine, but the present disclosure is not limited to this embodiment.

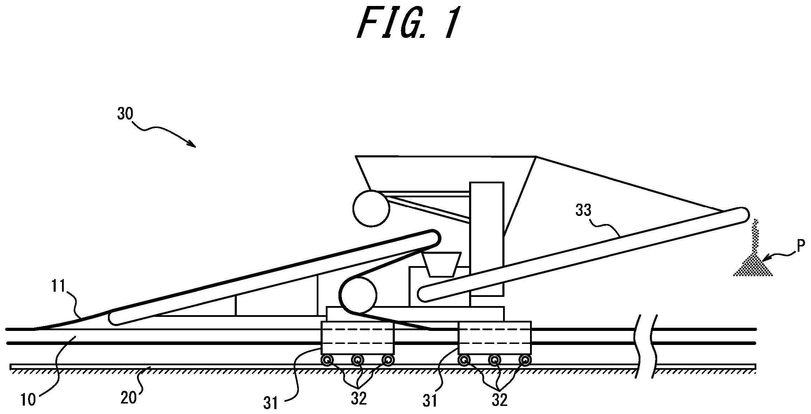

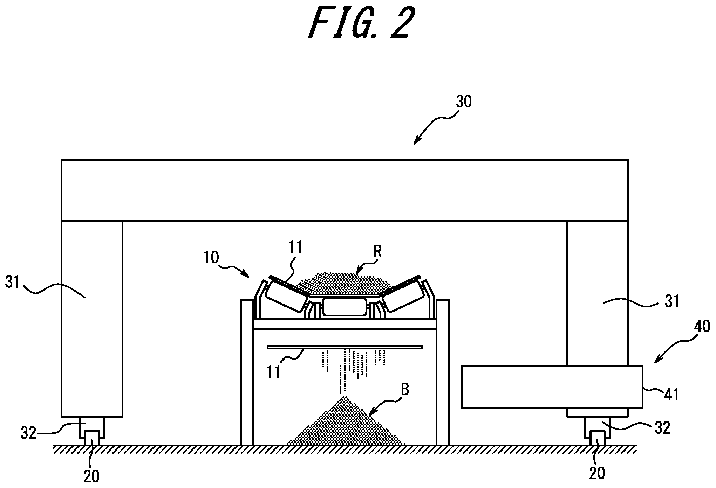

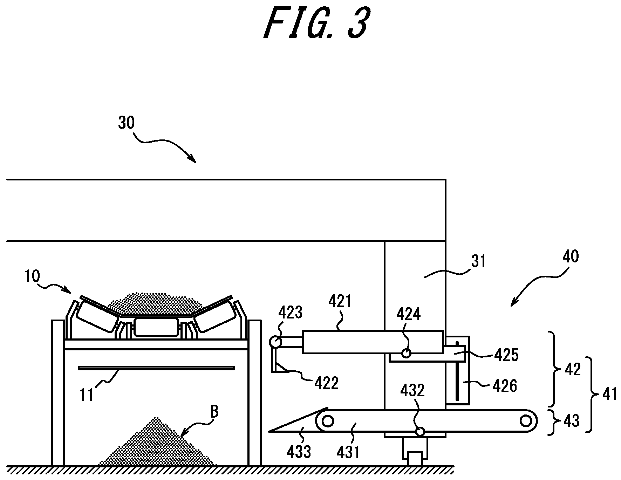

FIG. 1 to FIG. 3 are schematic diagrams illustrating the structures of a belt conveyor 10, rails 20, a mobile machine 30, and a cleaning device 40, with FIG. 1 being a side view and FIG. 2 and FIG. 3 being front views.

As illustrated in FIG. 1 and FIG. 2, a pair of parallel rails 20 extending in the conveying direction of the belt conveyor 10 are laid on the ground on both sides of the belt conveyor 10. The mobile machine 30 includes legs 31 and travel wheels 32 and is capable of traveling on the rails 20. The mobile machine 30 is arranged so as to straddle the belt conveyor 10 installed on the ground, that is, so that the belt conveyor 10 is positioned between a pair of the legs 31, and a part of a belt 11 of the belt conveyor 10 is inside of the mobile machine 30. In FIG. 2, the upper structure of the mobile machine 30 is omitted.

When stacking raw material, first, the mobile machine 30 travels on the rails 20 to a pre-designated location in the raw material yard. Next, raw material R conveyed by the belt conveyor 10 is transferred to an on-board belt conveyor 33 provided on the mobile machine 30, and the raw material R is dropped from a tip of the on-board belt conveyor 33 to a designated location, forming a raw material pile P.

The belt 11 is an endless belt looped around a pulley (not illustrated). The side that travels above the belt conveyor to convey raw material is called the "upper run", and the side that turns around the pulley and travels below the belt conveyor is called the "return run". The conveying surface of the belt 11 faces downward during the return run, and therefore raw material adhering to the conveying surface is constantly subjected to gravity and falls to the ground due to vibration. Repetition of this process causes the raw material to accumulate under the belt 11 to form a deposit B.

Therefore, the cleaning device 40 of the present disclosure includes a collecting unit 41 mounted on the mobile machine 30, for cleaning up the deposit B. FIG. 3 is a schematic diagram illustrating an example of a specific structure of the collecting unit 41 included in the cleaning device 40. The location of the collecting unit 41 is not particularly limited, but the collecting unit 41 is preferably installed on at least one of the legs 31 of the mobile machine 30, as illustrated in FIG. 2 and FIG. 3.

According to the present embodiment, the collecting unit 41 includes a scraping arm 42 that scrapes out the deposit, and a collecting conveyor 43 that recovers and moves the deposit scraped out by the scraping arm 42 to the outside of the rails 20.

The scraping arm 42 has a scraping plate 422 tiltably attached by a hinge 423 to a distal end of a telescopic arm 421. The arm 421 is attached to a frame 425 via a hinge 424 so as to be tiltable relative to the leg 31 of the mobile machine 30, and the frame 425 is attached to the leg 31 via an elevation mechanism 426.

The collecting conveyor 43 includes a conveyor body 431 that conveys the deposit scraped out by the scraping arm 42 to the outside of the rails 20, and the conveyor body 431 is tiltably attached to the leg 31 by a hinge 432. A slope 433 is attached to a distal end of the conveyor body 431 on the belt conveyor 10 side so as to easily guide the deposit B onto the conveyor body 431.

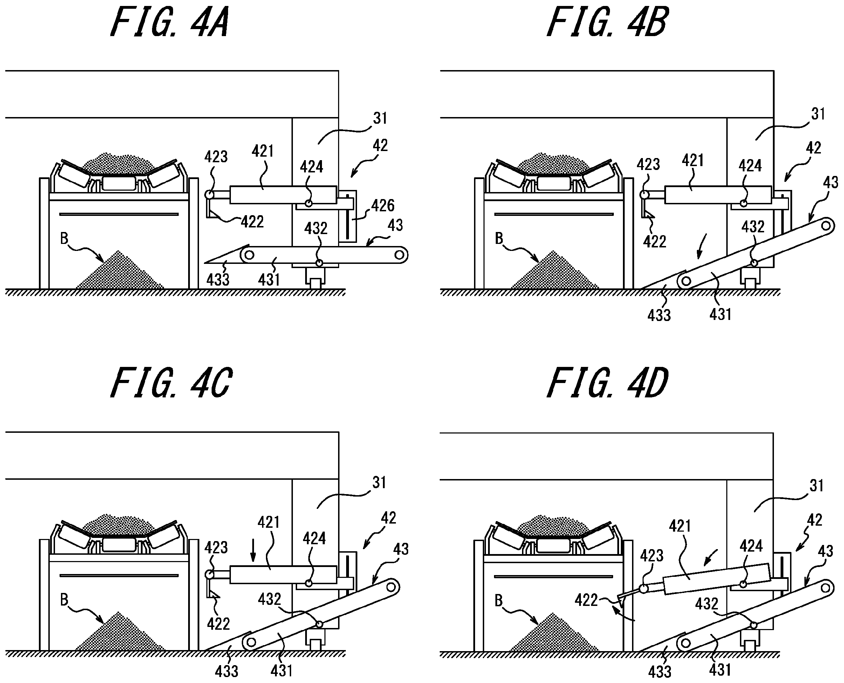

The following describes an example of actions of the collecting unit 41 with reference to FIG. 4A to FIG. 5G. When collection is carried out, first, as illustrated in FIG. 4A, the mobile machine 30 moves alongside the deposit B to be recovered. Then, before collection work, the collecting conveyor 43 is tilted so that the slope 433 is in contact with the ground (FIG. 4B).

Next, the arm 421 is lowered by the elevation mechanism 426 (FIG. 4C). Further, the scraping plate 422 is tilted around the hinge 423 as a pivot point, and the arm 421 is tilted around the hinge 424 as a pivot point, so that the scraping plate 422 can enter between the belt conveyor 10 and the deposit B (FIG. 4D).

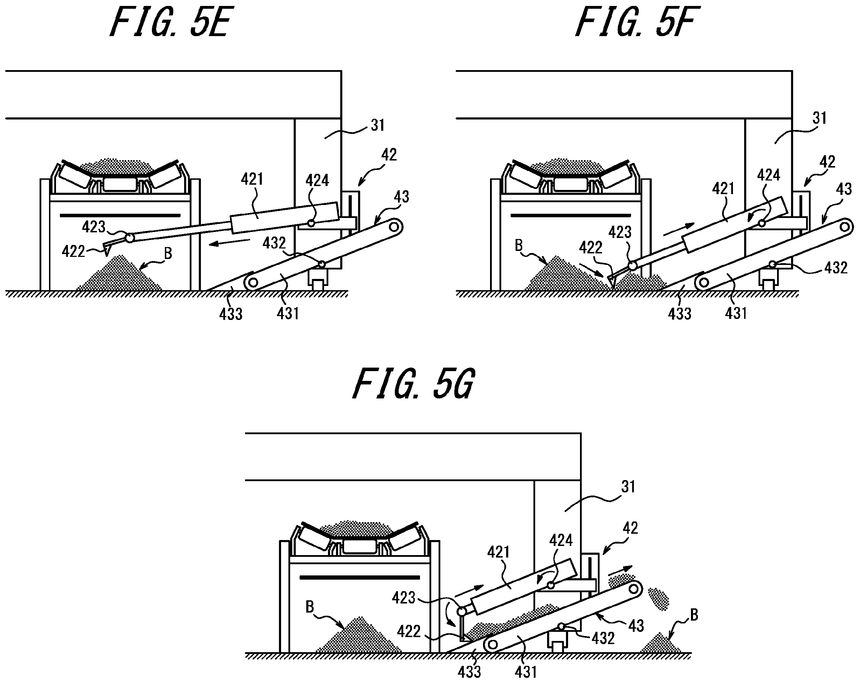

Next, the arm 421 is extended to move the scraping plate 422 above the deposit B (FIG. 5E). Thereafter, the arm 421 is retracted, and tilted by the hinge 424, to break up the deposit B and scrape it up to the slope 433 (FIG. 5F).

Then, the arm 421 is further retracted, the scraping plate 422 is raised, and the deposit B is placed on the conveyor body 431 along the slope 433. The deposit B placed on the conveyor body 431 is conveyed to the outside of the rails 20 and falls onto the ground (FIG. 5G).

By repeating the above operation, the deposit B to be recovered can be moved to the outside of the rails 20. In the example illustrated in FIG. 4A to FIG. 5G, the scraping plate 422 has an L-shape, but is not limited to this and may be any shape. For example, the scraping plate 422 may be rake-shaped.

Further, instead of the scraping plate 422, a crushing roller that scrapes out the deposit while crushing it may be provided at the distal end of the arm 421. Further, when the deposit is sticking, a water nozzle may be provided at the distal end of the scraping arm 42, and water may be sprayed onto the deposit to soften the deposit before scraping work.

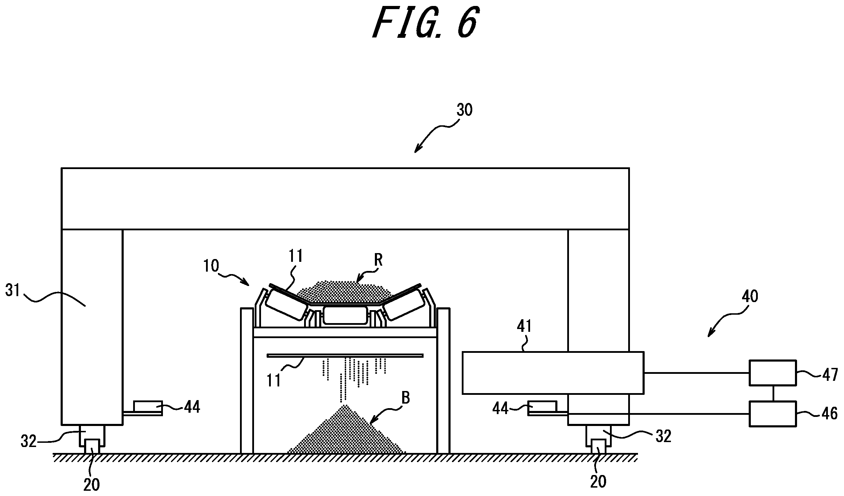

FIG. 6 is a front view diagram schematically illustrating a structure of the cleaning device according to another embodiment of the present disclosure. As illustrated in FIG. 6, the cleaning device 40 of the present disclosure may further include at least one of a measuring unit 44, a controller 47, and a processor 46 in addition to the collecting unit 41. The cleaning device 40 including these components is described below.

### (Measuring unit)

The cleaning device according to an embodiment of the present disclosure may further include a measuring unit that measures the height of the deposit accumulated under the belt. Any measuring unit may be used as long as the measuring unit can measure the height of the deposit. Examples of the measuring unit include a camera, a laser sensor, and a time of flight (ToF) sensor.

The installation position of the measuring unit is not particularly limited, but as illustrated in FIG. 6, the measuring unit is preferably provided on a leg of the mobile machine, similarly to the collecting unit.

The number of measuring units is not particularly limited, and may be one, or two or more. When there is only one measuring unit, the measuring unit is preferably provided on one leg of the mobile machine. In such a case, the measuring unit may be provided on the leg on the same side as the collecting unit, or on the leg on the opposite side. As illustrated in FIG. 6, when there is a plurality of the measuring units, at least one measuring unit is preferably provided on each of the pair of legs. When the measuring unit is provided on both of the pair of legs, it is preferable that the measuring units are provided at positions opposite each other. This makes it possible to detect not only the height of the deposit but also the position of the deposit in the width direction of the belt.

### (Controller)

The cleaning device according to an embodiment of the present disclosure preferably further comprises a controller for controlling each part of the cleaning device. For example, when cleaning work is carried out based on an instruction from an operator, the controller may be configured to drive the collecting unit to carry out cleaning when an instruction is received from the operator.

Further, according to an embodiment of the present disclosure, the controller may be configured to automatically carry out cleaning based on an accumulation state or the like of a deposit, even without a command from an operator. For example, it is preferable that the controller controls the collecting unit to drive the collecting unit to recover the deposit when the height of the deposit measured by the measuring unit exceeds a predetermined reference.

The reference is not particularly limited and may be determined by any method. For example, a rule may be set such that collection is to be carried out when a distance between the deposit and the belt exceeds a predetermined value (such as 100 mm). Further, a rule may be set such that collection is to be carried out when the height of the deposit exceeds n % of the distance from the ground to the belt. The n % may be predetermined in a range of, for example, 50 % or more and less than 100 %. Upon determining that the defined reference has been exceeded, the controller specifies the location of the deposit to be collected and issues a collection command to the mobile machine. The mobile machine is then moved to the specified position, and the deposit is recovered by the collecting unit.

The location where the controller is installed is not particularly limited, and the controller may be installed at any location. The controller may be mounted on the mobile machine as with the collecting unit. The controller 47 is preferably installed outside the mobile machine 30 as illustrated in FIG. 6. In such a case, the controller 47 and the collecting unit 41 can be connected by any method, whether wired or wireless.

The controller may be, for example, a computer including a recording medium containing software for carrying out the control.

### (Processor)

Further, it is preferable that the cleaning device according to an embodiment of the present disclosure further comprises a processor that creates a deposit height map, based on the height of the deposit measured by the measuring unit, which indicates a relationship between position in the conveying direction of the belt conveyor and the height of the deposit at that position.

For example, when the mobile machine travels on the rails, the height of the deposit is constantly measured by the measuring unit, and the deposit height map can be created by matching the measured deposit height information with the position information of the mobile machine at the time the measurement was made.

In such a case, the position information of the mobile machine is not particularly limited and can be obtained by any method. For example, position can be calculated from the number of rotations of a travel wheel of the mobile machine measured by an encoder attached to the travel wheel. Further, in raw material yards of steelworks and the like, markers indicating a current position of the mobile machine may be installed at regular intervals along a travel route of the mobile machine. When the markers are character displays (including numbers), character information can be read by a camera or the like, and the position of the mobile machine can be determined based on that information. Further, when the markers are one-dimensional codes such as barcodes or two-dimensional codes such as a QR Codes^{®} (QR Code is a registered trademark in Japan, other countries, or both), the position information can be read using a reader compatible with such codes. When an imaging device such as a camera is used as the measuring unit that measures the height of the deposit, it is also preferable to use the imaging device to read the markers.

The controller can carry out the control based on the deposit height map thus obtained. For example, when there are multiple locations within the entire travel range of the mobile machine where the height of deposits exceeds a predetermined reference, the priority of the cleaning work can be determined according to the height. Further, it is also possible to predict in advance the time required to move the mobile machine to the position where the deposit is to be recovered and to carry out the collection, based on the deposit height map and the current position of the mobile machine.

The location where the processor is installed is not particularly limited, and the processor may be installed at any location. The processor may be mounted on the mobile machine as with the collecting unit. The processor 46 is preferably installed outside the mobile machine 30 as illustrated in FIG. 6. In such a case, the processor 46 and the measuring unit 44 can be connected by any method, whether wired or wireless.

The processor may be, for example, a computer including a recording medium containing software for carrying out calculations.

Further, when the cleaning device 40 includes both the processor 46 and the controller 47, one can serve as the other. In other words, the cleaning device 40 of the present disclosure may include a processor controller that functions as both the controller and the processor. The processor controller may be, for example, a computer including a recording medium containing software for carrying out the calculations and the control.

When the mobile machine handles items conveyed by the belt conveyor, it is preferable that the controller drives the collecting unit to recover the deposit when the mobile machine is not in operation. This allows the deposit to be recovered without interfering with the operation of the mobile machine. In other words, it is preferable to stop collection when the mobile machine is in operation. Examples of mobile machines that handle items conveyed by a belt conveyor include stackers, reclaimers, stacker-reclaimers, and unloaders.

Mobile machines that handle items conveyed by a belt conveyor, such as stackers and reclaimers, typically have a predetermined operation schedule and are operated according to that schedule. Therefore, the controller more preferably determines a timing of collecting the deposit in consideration of the operation schedule of the mobile machine. For example, by referring to the operation schedule, it is possible to know the timing when the mobile machine is not in operation but is on standby, and the length of the non-operating period (standby time) at that time. On the other hand, as described above, the time required to move the mobile machine to the position where collection is to be carried out and to carry out the collection (collection time) can be calculated in advance from the deposit height map and the current position of the mobile machine. Therefore, when the collection time is shorter than the standby time, the collection work can be carried out during the non-operating timing.

Further, an operator may judge the state of the mobile machine (traveling, stacking, standby, or the like) and give an instruction to the controller to determine whether the mobile machine is in operation or not.

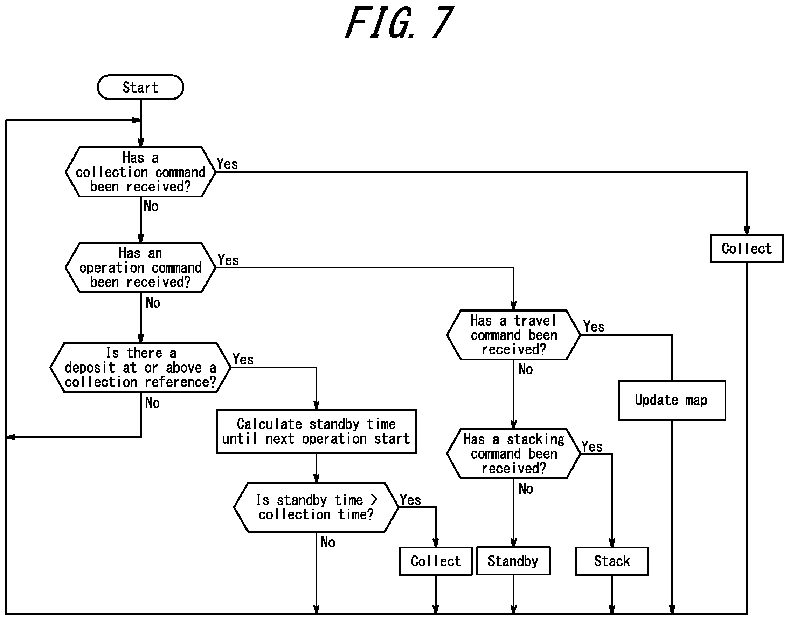

The following describes the flow of the cleaning method according to an embodiment of the present disclosure, with reference to FIG. 7 to FIG. 9. In the example illustrated in FIG. 7, the mobile machine is assumed to be a stacker. Further, collection is carried out in two cases: when an instruction is received from an operator, and when collection is judged to be necessary based on information on the height of a deposit.

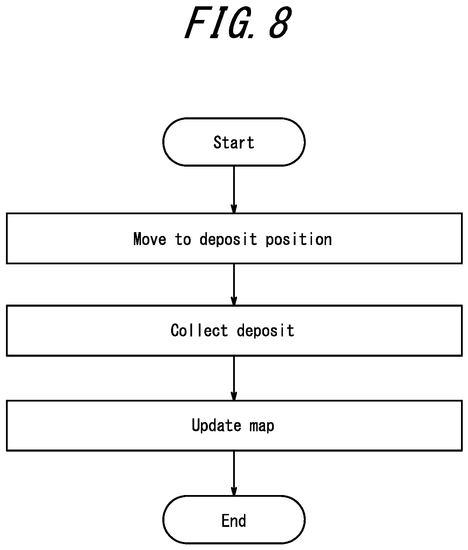

First, when a collection command is received from an operator, collection is immediately carried out. In such a case, an operator preferably issues a collection command after confirming that the mobile machine is not in operation. The specific flow of collection is as illustrated in FIG. 8. That is, first, the mobile machine is moved to the position of the deposit to be recovered. Once moved to the position, the deposit is recovered using the collecting unit. The height of the deposit at the position decreases due to the collection, and therefore the height information for that position in the deposit height map is updated.

On the other hand, when no collection command has been received from an operator, the mobile machine can carry out normal operation. Therefore, when an operation command for operating the mobile machine is received, the mobile machine can carry out the following actions according to the content of the operation command.

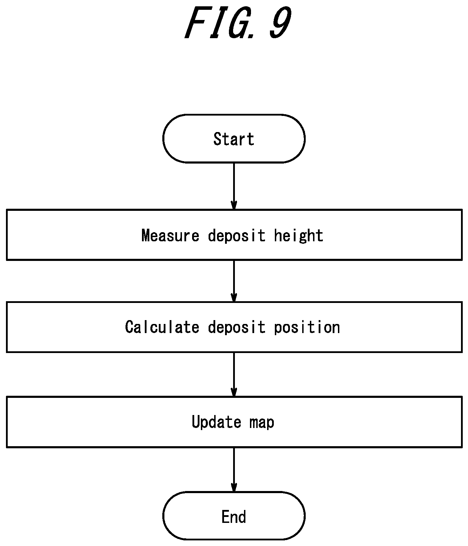

First, when the operation command is a travel command, the mobile machine is caused to travel on the rails and moved to a defined position. At this time, the deposit height map is updated. Specifically, as illustrated in FIG. 9, the height of the deposit is measured by a measuring unit. Further, position of the mobile machine is calculated. The deposit height map is then updated based on the obtained deposit height information and the mobile machine position information. The map can be updated by comparing the current map with the latest measured information and updating when the height of the deposit has changed.

Further, when the operation command is a stacking command, the stacking work is carried out as instructed. That is, a stacker, which is the mobile machine, is operated to drop the raw material carried by the belt conveyor onto a defined position in the raw material yard, where the raw material is stacked as a raw material pile.

When the operation command is neither a travel command nor a stacking command, the mobile machine may standby.

When the mobile machine has not received either a collection command or an operation command, that is, when not in operation (standby state), whether or not to carry out collection work is determined, and collection work can be carried out when possible.

Specifically, first, it is determined from the information in the deposit height map whether there is any deposit whose height exceeds the collection reference (predetermined reference). When there is no such deposit, standby state is returned to, but when there is deposit that exceeds the collection reference, whether collection work can be carried out during the current non-operating period is determined. That is, the time from the current time until the next operation (standby time) is calculated from the operation schedule of the mobile machine. Then, the time required to recover the deposit (collection time) is compared with the standby time, and when the collection time is shorter than the standby time, it is determined that collection work can be carried out during the standby time, and a collection command is issued to the mobile machine. The collection time is the sum of the time required to move the mobile machine from its current position to the collection position and the time required to recover the deposit at that position.

After the collection work is completed, the mobile machine may remain in place or may move to a position based on the next operation command. Once the collection of the deposit is complete, the height information for that position in the deposit height map is updated to the latest information.

As described above, according to the present disclosure, the collecting unit attached to the mobile machine can recover the deposit under the belt and move the deposit to the outside of the rails. Once moved, the deposit is outside the travel range of the mobile machine, and therefore can be collected at a time convenient for workers. Further, the deposit can be recovered and moved to the outside of the rails during non-operating times when the mobile machine is not carrying out work, and therefore there is no need to stop operation of the mobile machine to recover the deposit.

### REFERENCE SIGNS LIST

- 10: belt conveyor
- 11: belt
- 20: rail
- 30: mobile machine
- 31: leg
- 32: travel wheel
- 33: on-board belt conveyor
- 40: cleaning device
- 41: collecting unit
- 42: scraping arm
- 421: arm
- 422: scraping plate
- 423: hinge
- 424: hinge
- 425: frame
- 426: elevation mechanism
- 43: collecting conveyor
- 431: conveyor body
- 432: hinge
- 433: slope
- 44: measuring unit
- 46: processor
- 47: controller
- B: deposit
- P: raw material pile
- R: raw material

## Claims

1. A cleaning device for cleaning up a deposit accumulated under a belt of a belt conveyor, the cleaning device comprising
a collecting unit mounted on a mobile machine that travels on rails provided along the conveying direction of the belt conveyor, and configured to collect the deposit under the belt and move the deposit to the outside of the rails.

2. The cleaning device according to claim 1, wherein the collecting unit comprises: a scraping arm configured to scrape out the deposit; and a collecting conveyor configured to convey the deposit scraped out by the scraping arm to the outside of the rails.

3. The cleaning device according to claim 1 or 2, further comprising:
a measuring unit configured to measure a height of the deposit accumulated under the belt; and
a controller configured to drive the collecting unit to collect the deposit when the height of the deposit measured by the measuring unit exceeds a predetermined reference.

4. The cleaning device according to claim 3, further comprising:
a processor configured to create, from the height of the deposit measured by the measuring unit, a deposit height map representing a relationship between a position in the conveying direction of the belt conveyor and the height of the deposit at the position, wherein
the controller is configured to carry out a control based on the deposit height map.

5. The cleaning device according to claim 3 or 4, wherein
the mobile machine is configured to handle items conveyed by the belt conveyor, and
the controller is configured to drive the collecting unit to collect the deposit when the mobile machine is not in operation.

6. The cleaning device according to any one of claims 3 to 5, wherein the controller determines a timing of collecting the deposit in consideration of an operation schedule of the mobile machine.

7. A cleaning method for cleaning up a deposit accumulated under a belt of a belt conveyor, the cleaning method comprising
collecting, via a collecting unit mounted on a mobile machine that travels on rails provided along the conveying direction of the belt conveyor, the deposit under the belt and moving the deposit to the outside of the rails.

8. The cleaning method according to claim 7, wherein the collecting unit comprises: a scraping arm configured to scrape out the deposit; and a conveyor configured to convey the deposit scraped out by the scraping arm to the outside of the rails.

9. The cleaning method according to claim 7 or 8, further comprising:
measuring, via a measuring unit, a height of the deposit accumulated under the belt; and
driving the collecting unit to collect the deposit when the height of the deposit measured by the measuring unit exceeds a predetermined reference.

10. The cleaning method according to claim 9, further comprising creating, from the height of the deposit measured by the measuring unit, a deposit height map representing a relationship between a position in the conveying direction of the belt conveyor and the height of the deposit at the position, and
collecting the deposit based on the deposit height map.

11. The cleaning method according to claim 9 or 10, wherein
the mobile machine is configured to handle items conveyed by the belt conveyor, and
the collecting unit is driven to collect the deposit when the mobile machine is not in operation.

12. The cleaning method according to any one of claims 7 to 11, wherein a timing of collecting the deposit is determined in consideration of an operation schedule of the mobile machine.
